# EUROPEAN PATENT SPECIFICATION

(11) **EP 3 303 777 B1**
(45) Date of publication and mention of the grant of the patent: **23.08.2023**
(21) Application number: 16726840.8
(22) Date of filing: 25.05.2016
(51) Int. Cl.: F01D 25/24, F02C 7/32, F16B 19/08

(54) **METHOD FOR ASSEMBLING EQUIPMENT ON A SUPPORT OF A TURBOMACHINE**
VERFAHREN ZUR ANORDNUNG VON AUSRÜSTUNG AUF EINEM TRÄGER EINER TURBOMASCHINE
PROCÉDÉ PERMETTANT DE MONTER UN ÉQUIPEMENT SUR UN SUPPORT D'UNE TURBOMACHINE

(30) Priority: 25.05.2015 IT UB20150874
(43) Date of publication of application: 11.04.2018
(73) Proprietor: Nuovo Pignone Tecnologie - S.R.L., 50127 Florence (IT)
(72) Inventor: FORNACIARI, Fabio, 50127 Florence (IT); TOGNARELLI, Leonardo, 50127 Florence (IT); PACCIANI, Alessandro, 50127 Florence (IT); BIGI, Mario, 50127 Florence (IT)
(74) Representative: Novagraaf Group
(86) International application number: PCT/EP2016/061783
(87) International publication number: WO 2016/189026

(56) References cited:
- EP-A1- 0 494 747
- EP-A2- 1 557 577
- US-A- 2 188 422
- US-A- 4 659 268
- US-A1- 2004 194 284
- US-A1- 2014 130 335
- US-B1- 6 676 874

## Description

The present invention relates to a method for assembling equipment on a support of a turbomachine.

More specifically, the present invention concerns a method for mechanically assembling electrical packaging, tubing, piping and similar equipment as well as supports for gas and steam turbine and/or centrifugal compressor to a skid, without welding.

EP 1 557 577 A2, EP 0 494 747 A1, US 2 188 422 A disclose examples of rivet nuts.

US 2004/194284 A1 discloses an adhesive encapsulated blind rivet system.

In the field of turbomachine implants, comprising gas or steam turbine and compressor, it is known to provide a base support, named skid, to which electrical cables, tubing and piping as well as the gas or steam turbine and compressor are firmly coupled.

Electrical packaging is a set of cable trays, and related supports, for protecting electrical cables; tubing is the set of channels for fluid supplying (primary and pneumatic tubing); the turbine and the compressor are supported by means of mechanical supports, i.e. a support bracket; all the supports of these equipment must be connected to the support skid, and they are assembled *in situ* by means of welding.

A critical aspect of the gas/steam turbine and compressor equipment assembly in turbomachine implants relates to oxidation: the whole implant assembly is exposed to an aggressive environment, especially when the implants are placed on off-shore platforms. It is therefore mandatory that all the components and assembled parts of an oil and gas implant are protected against corrosion.

The support is therefore painted with a special protective coating and sealed.

Usually, turbomachine are assembled on a skid, and therefore the assembling on a skid will be considered hereafter in the description, but the method of the present invention relates to the assembly of a turbomachine on a support in general, e.g. on a beam of support.

The customer has the possibility to decide how and in which point of the skid to position the equipment, and therefore the assembling operations are performed manually by an operator by means of welding the equipment to the skid directly *in situ.*

The welding of the equipment's supports on the skid needs several preparatory operations such as the surface milling of the baseplate area at which the supports are welded, the sub-sole plate pre-fixing, the sub-sole plate final welding and, after the welding, the further painting of the surface of the baseplate around the welding area with a protective coating and, finally, the support assembly.

The known welding process illustrated above is affected by several drawbacks.

The first drawback consists of the fact that the assembly process is a manual process, comprising a phase of welding, resulting to be expensive, time consuming, and difficult to keep controlled in terms of quality of the overall process.

A further drawback is represented by the fact that the welding process has a significant impact on lead times and costs of implementation of the skid. Furthermore, the welding process imposes design and manufacturability constraints such as the accessibility to the welding are.

Another drawback of the welding assembly process is represented by the high costs of the painting phase of the welding area of the surface of the base-plate.

### SUMMARY

The present invention relates to a method for assembling equipment on a support of a turbomachine as defined in claim 1.

Other embodiments of the invention are defined in the appended dependent claims.

Further details and specific embodiments will refer to the attached drawing, in which:
- Figure 1 is perspective view of a skid to which equipment are assembled;
- Figure 2 is a schematic view of a conduit or packaging for electric cables, welded to said skid according to the prior art;
- Figure 3 is a schematic view of a tubing assembly for hydraulic lines to be welded to said support skid according to the prior art;
- Figure 4A shows a rivet nut according to a first embodiment of the present invention;
- Figure 4B shows a rivet nut according to a second embodiment of the present invention;
- Figure 4C shows a rivet nut according to the first embodiment of figure 4A provided with a solid coating on its external surface;
- Figure 4D shows a rivet nut according to the second embodiment of figure 4B provided with a solid coating on its external surface;
- Figure 5 shows the assembling sequence of a rivet nut to a support according to an aspect of the present invention;
- Figures 5A and 5B show an enlarged view of a rivet nut according to one embodiment of the present invention after the upset and with a fixing screw inserted therein respectively;
- Figure 6 shows the assembling sequence of a rivet nut to a support according to an alternative aspect of the present invention;
- Figure 7 shows a section view of a possible configuration of the assembly of a conduit packaging to a support according to the present invention;
- Figure 8 shows a general view of a possible assembly configuration of a conduit packaging to a support according to the present invention;
- Figure 9 shows a general view of a possible assembly configuration of tubing equipment to a support according to the present invention.

### DETAILED DESCRIPTION

The following description of an exemplary embodiment refers to the accompanying drawings. The following detailed description does not limit the invention. Instead, the scope of the invention is defined by the appended claims.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various point of the specification is not necessarily referring to the same embodiment. Further, the particular features, structures or characteristics may be combined in any suitable manner in one or more embodiments.

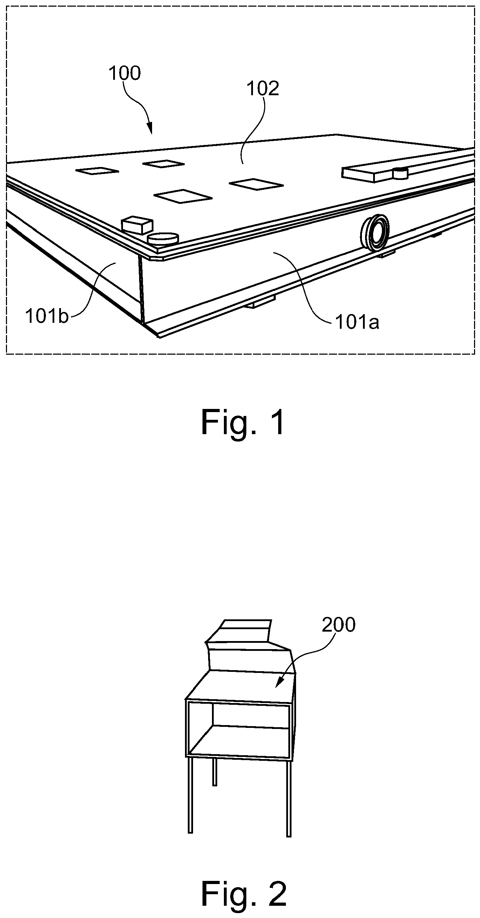

With reference to Figure 1, it is shown a typical skid 100 for supporting the equipment of oil and gas implants.

More specifically, the skid 100 is configured as a closed case with a lower base plate 101a and an upper cover plate 102. Within the skid case, electrical cables, tubing for hydraulic lines and similar equipment are usually stably connected to a skid part 101, said skid part 101 could be the base plate 101a or to the inner surface of the lateral vertical walls 101b. The skid part 101 is schematically represented in Figures from 5 to 9, and the skid part may be any part of the skid suitable to support the equipment.

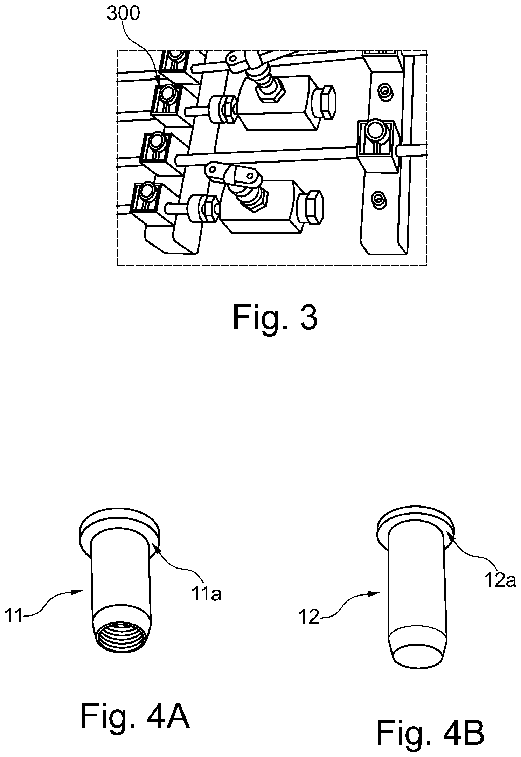

Figure 2 shows a typical electrical packaging 200 for electrical cables, and Figure 3 shows a typical arrangement for the tubing 300. The electrical packaging and the tubing assembly are typical equipment that are stably connected to the skid 100 by means of welding operations.

More in details, support brackets for the electrical packaging 200, for the tubing assembly 300 and/or for turbine and compressor are welded to an area of the baseplate 101 or of the inner surface of the lateral walls 101a, 101b and the equipment are then connected to said support brackets.

As already mentioned, in order to weld the brackets to the skid several preparatory and touching up operations are required: the surface area to which the brackets will be welded need to be manually milled, then the brackets need to be pre-fixed to said area and then the operator proceeds manually with the final welding. After the welding operation, is it mandatory to paint the area around the welding in order to avoid corrosion of the skid area.

With the method of the present invention, the welding phase is completely avoided.

The method for assembling equipment on a support according to the present invention comprises the step of mechanically assembling said equipment to the support skid 100 by means of a fastening device 10.

Said fastening device 10 comprises at least a rivet nut 11, 12.

According to a first embodiment, said rivet nut 11 has a passing threaded hole.

According to a second embodiment, said rivet nut 12 has a blind threaded hole.

Rivet nut 12 with a blind threaded hole are used for example when the fastening device is fixed to a support which communicates with an aggressive environment, for example when a tank for containing aggressive vapors and/or liquid is fixed to a support, and in general when it is mandatory to avoid, with respect to the support or skid part to which the fastening device 10 is associated, any communication between the internal and external environments.

Irrespective of whether the rivet nut has a passing threaded hole or a blind threaded hole, the fastening device 10 further comprises a fixing screw 20 for joining the skid part 101 once the rivet nut has been plastically deformed by means of a screwdriver 40 used to pull-out the rivet.

When the rivet nut deforms, a swelling 11b is created in contact with the lower surface 101c of said skid part 101.

The method for assembling equipment on a support according to the present invention further comprises a step consisting of realizing a fixing hole 30 on the skid part 101 for the insertion of the fastening device 10.

More in detail, the fixing hole 30 is realized on the skid, preferably by means of a step drill. More preferably, the step drill has at least three different diameters. Advantageously, the first diameter is of 4mm for realizing the center ground, the second diameter is approximately 1 mm smaller than the last step, and the last step is boring tool.

Preferably the hole preparation phase comprises the use of a driller with a variable speed gear and during the drilling phase the drill is kept in vertical position with respect to the skid surface using dedicated equipment. Once the fixing hole 30 has been realized, the burrs are removed from the hole, especially from the contour of the hole.

Once the hole 30 in the skid has been realized, the rivet nut can be inserted into the hole 30 and pulled-out by means of the screwdriver 40.

An interface area between the rivet nut and the skid part 101 is therefore defined.

The interface area is mainly represented by:
- the contact surface between the inner surface of the fixing hole 30 and the lateral surface of the rivet nut;
- the contact surface between the rivet swelling 11b and the lower surface 101c of the skid part 101;
- the contact surface between the collar of the head 11a, 11b of the rivet nut and the upper surface 101a of the skid part 101.

The rivet nut 11, 12 is preferably made of stainless steel, more preferably austenitic stainless steel, in order to prevent oxidation, especially in off-shore application. According to a preferred embodiment, the rivet nut is made of stainless steel AISI 316 L.

The method according to the present invention further comprises a step consisting of providing a coating layer 50 at the interface area between the rivet nut 11, 12 and the skid part 101.

Advantageously, said coating layer 50 is provided at least at the interface between the internal surface of the hole 30 and the external surface of the rivet nut 11, 12.

According to one aspect of the invention, said coating is made of epoxy resin. More preferably said epoxy resin is a microencapsulated epoxy resin.

When the rivet nut is pulled-on and plastically deformed by the screwdriver, the coating layer at the interface follows the rivet deformation: during deformation of the rivet the coating is compressed on the lower side of the skid part 101. The coating is trapped between the crimped nut and the skid part 101 and the presence of the resin perfectly seals the interface between the nut and the skid part avoiding the risk of oxidation.

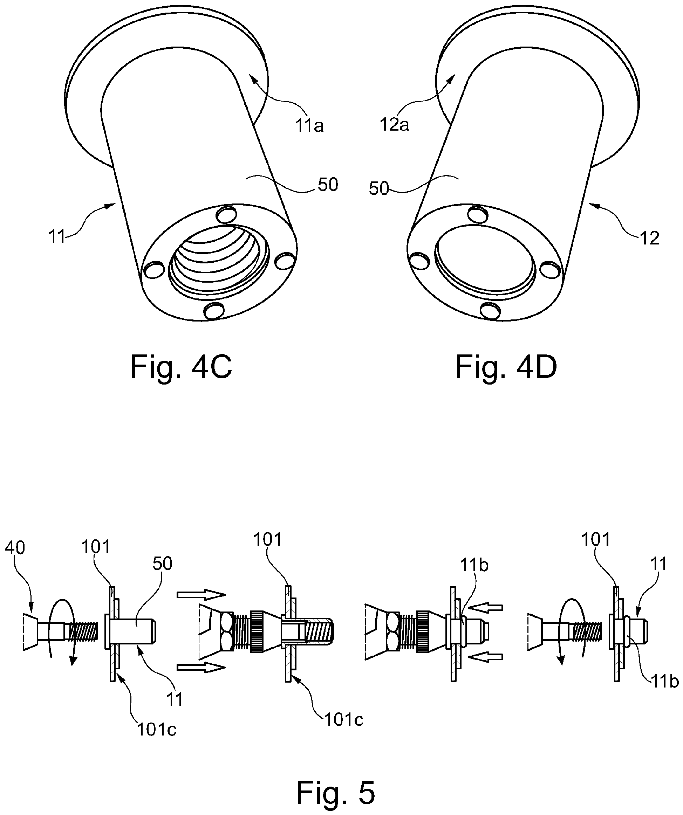

According to a preferred embodiment, the fastening device comprises a rivet nut 11, 12 provided on its external surface facing the hole 3 and along its entire length, thus the portion inserted in the hole, with a coating 50 made of resin. More preferably said external coating 50 of resin embraces the whole external surface of the rivet nut, particularly the lower surface of the rivet head 11a, 12a. Reference is made to Figures 4C and 4D.

Advantageously, the external coating is made of epoxy resin resin, more preferably of microencapsulated epoxy resin. During the deformation of the rivet the microencapsulated spheres containing the epoxy resin are broken in order to release a flow of epoxy resin that fills the gap between the crimped nut and the skid part.

According to an alternative embodiment of the present invention, the coating layer 50 is provided on the internal surface of the fixing hole 30 of the skid part 101.

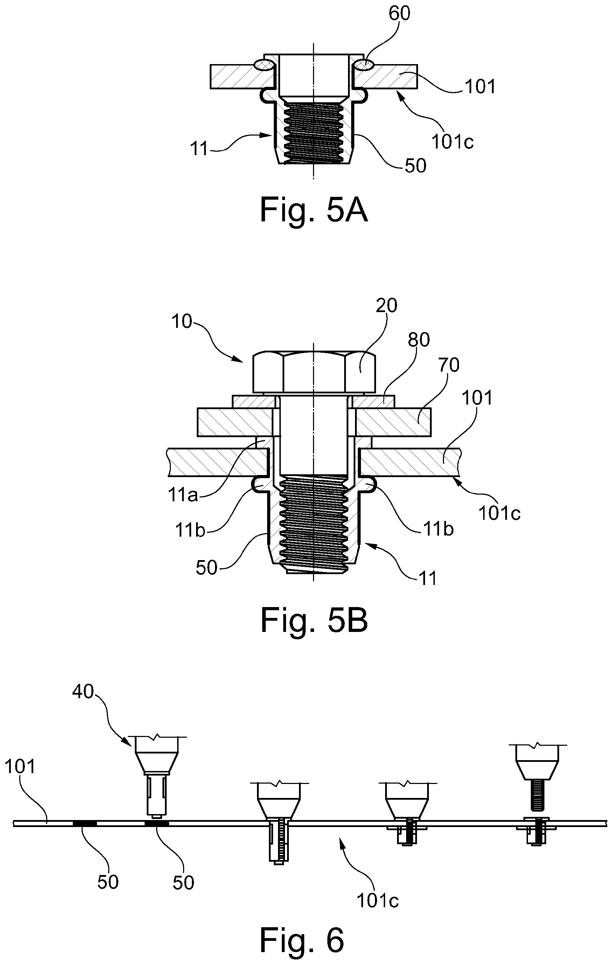

Reference is made to Figure 6.

Once the rivet has been inserted into the fixing hole 30 it is pulled-out and plastically deformed. After this operation the resin is compressed on the lower side of the skid part 101, the opposite side of the skid with respect to the direction head of the rivet nut.

During the deformation of the rivet nut the resin is trapped between the crimped rivet and the skid part and this seals the area.

Preferably, the fastening device 10 further comprises a sealing element 60.

Advantageously, said sealing element 60 is an O-ring which is positioned below the collar. The O-ring allows to have a sealed coupling when the rivet nut is assembled and the O-ring is compressed.

When the resin 50 is positioned directly on the internal surface of the fixing hole 30, the resin itself fills the space between the lower surface of the rivet head 11a, 12a and the skid part 101 to which the rivet is fixed.

With reference to Figure 5B, once the rivet nut 11, 12 has been fixed to the skid part 101, the bracket or support element 70 which has to be fixed to the skid part can be positioned and fixed by means of the fixing screw 20 which is screwed into the rivet nut.

A washer 80 is preferably inserted between the head of the fixing screw 20 and the bracket 70.

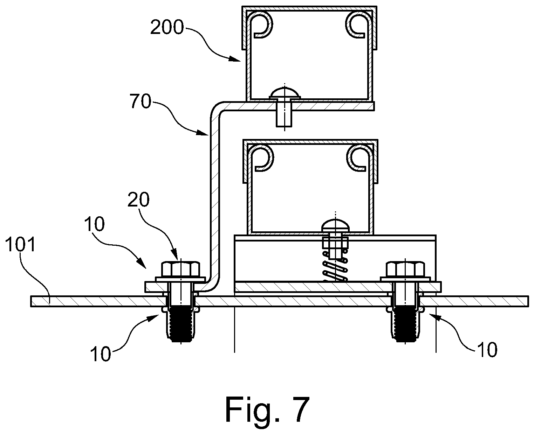

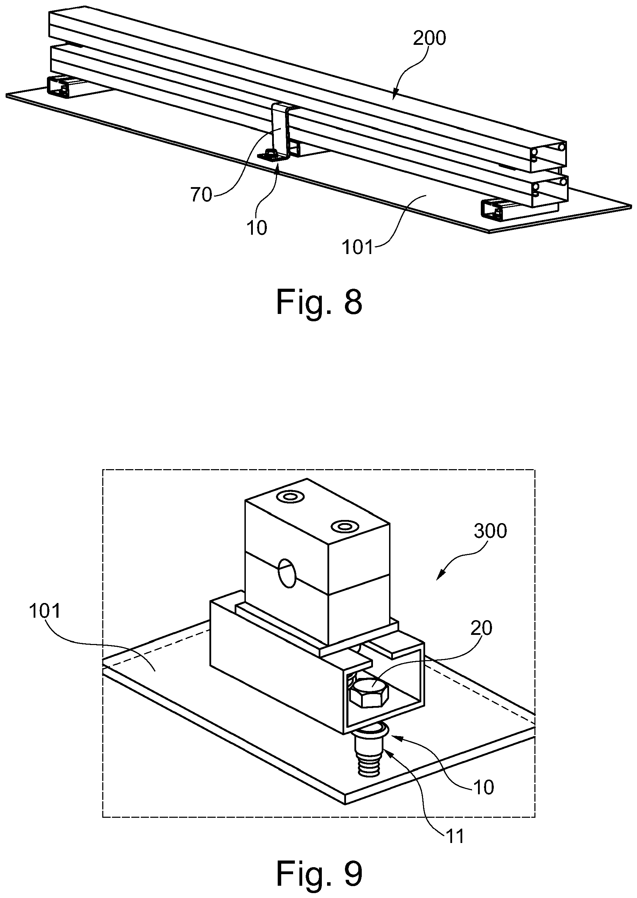

Possible examples of bracket for electrical packaging 200 are given in Figures 7 and 8. Possible example of tubing assembly 300 is given in Figure 9.

The method for assembling equipment on a skid according to the present invention allows to reduce the lead time and the related cost of the traditional welding process, and at the same time it prevents the oxidation of the internal surfaces without painting.

## Claims

1. Method for assembling equipment on a support skid (100) of a turbomachine, the method comprising the step of mechanically assembling said equipment to a skid part (101) of said support (100) by means of a fastening device (10) and a further step consisting of providing a coating layer (50) of epoxy resin at an interface area between said fastening device (10) and said skid part (101);
said fastening device (10) comprising a rivet nut (11, 12); and
wherein the step of mechanically assembling said equipment to said skid part (101) comprises the following phases:
- realizing a fixing hole (30) on said skid part (101);
- deburring of internal edge fixing hole (30);
- inserting said rivet nut (11, 12) in said fixing hole (30) thus defining said interface area between the rivet nut (11, 12) and the skid part (101)
**characterised by** further
- providing with a coating layer (50) said interface area; and
- plastically deforming said rivet nut (11, 12) thus firmly assembling said rivet nut (11, 12) to said skid part (101), wherein the coating layer (50) is provided before the plastic deformation of said rivet nut (11, 12);
wherein the phase of providing with a coating layer the interface area between the rivet nut (11, 12) and the skid part (101) comprises the step of providing a coating layer (50) on the internal surface of the fixing hole (30).

2. Method according to any preceding claim, wherein the phase of providing with a coating layer the interface area between the rivet nut (11, 12) and the skid part (101) comprises the step of providing a coating layer (50) on the external surface of the rivet nut (11, 12).

3. Method according to claim 1 or claim 2, wherein the step of mechanically assembling said equipment to said support part (101) comprises the following phases:
- coupling a support bracket (70) to said rivet nut (11, 12)
- inserting a fixing screw (20) into said rivet nut (11, 12) thus firmly assembling the support bracket (70) to the skid part (101) to which the rivet nut (11, 12) is assembled.

4. Method according to one or more of the preceding claims, wherein said coating of epoxy resin is a solid coating of a microencapsulated epoxy resin.

5. Method according to claim 4, wherein the coating of epoxy resin is arranged on the external surface of said rivet nut (11, 12) facing the skid part (101).

6. Method according to claim 4 or 5, wherein the coating of epoxy resin is arranged on the lower surface of the rivet head (11a, 12a).

7. Method according to one or more of the preceding claims, wherein said rivet nut (11, 12) is made of stainless steel, preferably an austenitic stainless steel.

8. Method according to one or more of the preceding claims, wherein said fastening device (10) further comprises a sealing element (60), preferably an O-ring (60), placed between the rivet head (11a, 12a) and the skid part (101).

9. Method according to the preceding claim, wherein said sealing element (60) is made of NBR or FKM.

10. Method according to one or more of the preceding claims, wherein said rivet nut (11) has a passing threaded hole.

11. Method according to one or more of the preceding claims, wherein said rivet nut (12) has a blind threaded hole.

## Patentansprüche

1. Verfahren zum Montieren von Ausrüstung auf einer Tragplatte (100) einer Turbomaschine, das Verfahren umfassend den Schritt des mechanischen Montierens der Ausrüstung an einem Plattenteil (101) des Trägers (100) mittels einer Befestigungsvorrichtung (10) und eines weiteren Schritts, bestehend aus einem Bereitstellen einer Beschichtungsschicht (50) aus Epoxidharz an einem Schnittstellenbereich zwischen der Befestigungsvorrichtung (10) und dem Plattenteil (101);
die Befestigungsvorrichtung (10) umfassend eine Nietmutter (11, 12); und
wobei der Schritt des mechanischen Montierens der Ausrüstung an dem Plattenteil (101) die folgenden Phasen umfasst:
- Verwirklichen eines Befestigungslochs (30) auf dem Plattenteil (101);
- Entgraten des Innenrands des Befestigungslochs (30);
- Einsetzen der Nietmutter (11, 12) in das Befestigungsloch (30), womit der Schnittstellenbereich zwischen der Nietmutter (11, 12) und dem Plattenteil (101) definiert wird, **gekennzeichnet durch** ferner
- Bereitstellen einer Beschichtungsschicht (50) für den Schnittstellenbereich; und
- plastisches Verformen der Nietmutter (11, 12), womit die Nietmutter (11, 12) an dem Plattenteil (101) fest montiert wird, wobei die Beschichtungsschicht (50) vor der plastischen Verformung der Nietmutter (11, 12) bereitgestellt wird;
wobei die Phase des Bereitstellens einer Beschichtungsschicht für den Schnittstellenbereich zwischen der Nietmutter (11, 12) und dem Plattenteil (101) den Schritt des Bereitstellens einer Beschichtungsschicht (50) auf der Innenoberfläche des Befestigungslochs (30) umfasst.

2. Verfahren nach einem der vorstehenden Ansprüche, wobei die Phase des Bereitstellens einer Beschichtungsschicht für den Schnittstellenbereich zwischen der Nietmutter (11, 12) und dem Plattenteil (101) den Schritt des Bereitstellens einer Beschichtungsschicht (50) auf der Außenoberfläche der Nietmutter (11, 12) umfasst.

3. Verfahren nach Anspruch 1 oder 2, wobei der Schritt des mechanischen Montierens der Ausrüstung an die Tragplatte (101) die folgenden Phasen umfasst:
- Koppeln eines Tragkonsole (70) an die Nietmutter (11, 12)
- Einsetzen einer Befestigungsschraube (20) in die Nietmutter (11, 12), womit die Tragkonsole (70) an dem Plattenteil (101) fest montiert wird, an das die Nietmutter (11, 12) montiert ist.

4. Verfahren nach einem oder mehreren der vorstehenden Ansprüche, wobei die Beschichtung aus Epoxidharz eine feste Beschichtung eines mikroverkapselten Epoxidharzes ist.

5. Verfahren nach Anspruch 4, wobei die Beschichtung aus Epoxidharz auf der Außenoberfläche der Nietmutter (11, 12), dem Plattenteil (101) zugewandt angeordnet ist.

6. Verfahren nach Anspruch 4 oder 5, wobei die Beschichtung aus Epoxidharz auf der unteren Oberfläche des Nietkopfs (11a, 12a) angeordnet ist.

7. Verfahren nach einem oder mehreren der vorstehenden Ansprüche, wobei die Nietmutter (11, 12) aus Edelstahl, vorzugsweise einem austenitischen Edelstahl, hergestellt ist.

8. Verfahren nach einem oder mehreren der vorstehenden Ansprüche, wobei die Befestigungsvorrichtung (10) ferner ein Dichtelement (60), vorzugsweise einen O-Ring (60), der zwischen dem Nietkopf (11a, 12a) und dem Plattenteil (101) angebracht ist, umfasst.

9. Verfahren nach dem vorstehenden Anspruch, wobei das Dichtelement (60) aus NBR oder FKM hergestellt ist.

10. Verfahren nach einem oder mehreren der vorstehenden Ansprüche, wobei die Nietmutter (11) ein durchgehendes Gewindeloch aufweist.

11. Verfahren nach einem oder mehreren der vorstehenden Ansprüche, wobei die Nietmutter (12) ein Sackgewindeloch aufweist.

## Revendications

1. Procédé d'assemblage d'équipement sur un patin de support (100) d'une turbomachine, le procédé comprenant l'étape consistant à assembler mécaniquement ledit équipement sur une partie de patin (101) dudit support (100) au moyen d'un dispositif de serrage (10) et une étape supplémentaire consistant à fournir une couche de revêtement (50) de résine époxy au niveau d'une zone d'interface entre ledit dispositif de serrage (10) et ladite partie de patin (101) ;
ledit dispositif de serrage (10) comprenant un écrou à rivet (11, 12) ; et
dans lequel l'étape consistant à assembler mécaniquement ledit équipement sur ladite partie de patin (101) comprend les phases suivantes :
- réaliser un trou de fixation (30) sur ladite partie de patin (101) ;
- ébavurage de trou de fixation de bord interne (30) ;
- insérer ledit écrou à rivet (11, 12) dans ledit trou de fixation (30) définissant ainsi ladite zone d'interface entre l'écrou à rivet (11, 12) et la partie de patin (101) **caractérisé par** en outre
- la fourniture d'une couche de revêtement (50) à ladite zone d'interface ; et
- la déformation plastique dudit écrou à rivet (11, 12) assemblant ainsi fermement ledit écrou à rivet (11, 12) à ladite partie de patin (101), dans lequel la couche de revêtement (50) est fournie avant la déformation plastique dudit écrou à rivet (11, 12) ;
dans lequel la phase de fourniture d'une couche de revêtement à la zone d'interface entre l'écrou à rivet (11, 12) et la partie de patin (101) comprend l'étape consistant à fournir une couche de revêtement (50) sur la surface interne du trou de fixation (30).

2. Procédé selon l'une quelconque revendication précédente, dans lequel la phase de fourniture d'une couche de revêtement à la zone d'interface entre l'écrou à rivet (11, 12) et la partie de patin (101) comprend l'étape consistant à fournir une couche de revêtement (50) sur la surface interne de l'écrou à rivet (11, 12).

3. Procédé selon la revendication 1 ou la revendication 2, dans lequel l'étape consistant à assembler mécaniquement ledit équipement sur ladite partie de support (101) comprend les phases suivantes :
- coupler une patte de support (70) audit écrou à rivet (11, 12)
- insérer une vis de fixation (20) dans ledit écrou à rivet (11, 12) assemblant ainsi fermement la patte de support (70) à la partie de patin (101) à laquelle l'écrou à rivet (11, 12) est assemblé.

4. Procédé selon l'une ou plusieurs des revendications précédentes, dans lequel ledit revêtement de résine époxy est un revêtement solide d'une résine époxy microencapsulée.

5. Procédé selon la revendication 4, dans lequel le revêtement de résine époxy est agencé sur la surface externe dudit écrou à rivet (11, 12) faisant face vers la partie de patin (101).

6. Procédé selon la revendication 4 ou 5, dans lequel le revêtement de résine époxy est agencé sur la surface inférieure de la tête à rivet (11a, 12a).

7. Procédé selon l'une ou plusieurs des revendications précédentes, dans lequel ledit écrou à rivet (11, 12) est fait en acier inoxydable, de préférence un acier inoxydable austénitique.

8. Procédé selon l'une ou plusieurs des revendications précédentes, dans lequel ledit dispositif de serrage (10) comprend en outre un élément d'étanchéité (60), de préférence un joint torique (60), placé entre la tête à rivet (11a, 12a) et la partie de patin (101).

9. Procédé selon la revendication précédente, dans lequel ledit élément d'étanchéité (60) est fait en NBR ou FKM.

10. Procédé selon l'une ou plusieurs des revendications précédentes, dans lequel ledit écrou à rivet (11) a un trou fileté traversant.

11. Procédé selon l'une ou plusieurs des revendications précédentes, dans lequel ledit écrou à rivet (12) a un trou fileté borgne.
